# EUROPÄISCHE PATENTSCHRIFT

(11) **EP 0 617 649 B1**
(45) Veröffentlichungstag und Bekanntmachung des Hinweises auf die Patenterteilung: **26.06.1996**
(21) Anmeldenummer: 93915624.6
(22) Anmeldetag: 03.08.1993
(51) Int. Cl.: B23B 41/02, B23B 51/04, B23Q 1/00

(54) **TIEFLOCHBOHRER**
DEEP-BORING DRILL
FORET LONG

(30) Priorität: 17.08.1992 CH 2561/92; 01.12.1992 CH 3677/92
(43) Veröffentlichungstag der Anmeldung: 05.10.1994
(73) Patentinhaber: Brun, Martin, CH-6215 Beromünster (CH)
(72) Erfinder: Brun, Martin, CH-6215 Beromünster (CH)
(74) Vertreter: Feldmann, Clarence Paul
(86) Internationale Anmeldenummer: CH9300194
(87) Internationale Veröffentlichungsnummer: WO9404303

(56) Entgegenhaltungen:
- DE-A- 3 529 603
- DE-C- 375 970
- GB-A- 294 457
- GB-A- 738 048
- US-A- 3 584 534
- US-A- 4 339 857

## Beschreibung

Die vorliegende Erfindung betrifft ein Verfahren zur Herstellung von tiefen Bohrlöchern, insbesondere in Holz und gleichartig strukturierten Materialien sowie einen hierzu geeigneten Tieflochbohrer und eine zur Durchführung des Verfahrens dienende Tieflochbohrmaschine. mit einem solchen Tieflochbohrer.

Bei der Materialbearbeitung stellt sich zeitweise die Aufgabe, tiefe Löcher in ein Werkstück zu bohren. Dabei ist besonders darauf zu achten, dass der Bohrer im Bohrloch nicht verläuft und dadurch nicht die gewünschte Richtung verliert. Bei der Bearbeitung von Holz ist die Gefahr des Verlaufens des Bohrers durch die durch die Jahrringe gebildete Struktur stark erhöht.
Ebenso muss dem Abtransport der Späne grosse Beachtung geschenkt werden. Diese können insbesondere bei einem langen Förderweg den Bohrer blockieren und zum Bruch desselben führen. Auch dies ist besonders in der Holzbearbeitung der Fall, da hier oft grossstückig brechende Späne auftreten.

In der Holzbearbeitung wird meist das Bohren von tiefen Löchern dadurch umgangen, dass entweder ein Werkstück geschlitzt wird oder eine Nut gefräst wird und die offene Oberfläche anschliessend wieder verschlossen wird. Diese Naht ist zum Teil unerwünscht, vorallem wenn sie sich in einer Sichtebene befindet.

In der Technik sind verschiedene Tieflochbohrer und damit verbundene Verfahren bekannt, die das Problem des Verlaufens des Bohrers oder der Spanabführung auf unterschiedliche Art lösen. Diese Tieflochbohrer werden jedoch hauptsächlich für Metall- oder Keramikbearbeitung eingesetzt.

Bei einer Ausführungsform, die in CH-A-653 270 dargelegt wird, wird mit intermittierender Rückholung gearbeitet, wobei der Bohrer in konstanten Zeitabständen automatisch aus dem Bohrloch retourniert wird und so die Späne mit sich heraustransportiert. Als Bohrer werden herkömmliche Spiralbohrer eingesetzt.
Dieses Verfahren besitzt einige Nachteile. Erstens erfordert sie eine aufwendige Steuerung, um die Vorschub- und Rückzugbewegung zeitlich zu optimieren und zu verhindern, dass der Bohrer mit zu grosser Geschwindigkeit ans Ende der Bohrung gelangt. Zweitens wird der Bohrprozess mehrmals unterbrochen, was einerseits einen Zeitverlust zur Folge hat, andererseits die Gleichmässigkeit der Bohrung beeinträchtigt. Drittens wird nicht das gesamte abgespante Material wegtransportiert. Je tiefer die Bohrung wird, umso grösser wird der Restbestand an zurückgebliebenen Spänen in der Bohrung, die zu einer Blockierung des Bohrers führen können.

Aus GB-A-1'415'137 ist ein Tieflochbohrer bekannt, dessen Schneidelemente sich an einem Rohr befinden. Ein zweites Rohr befindet sich zentrisch im ersten und ist mit diesem drehfest verbunden. Es dient der Zufuhr eines Kühlmittels, das anschliessend durch den ringförmigen Hohlraum zwischen den zwei Rohren von der Bohrstelle zurückfliesst. Dabei führt es zugleich die beim Bohren entstandenen Späne ab. Der Aufbau dieses Bohrers ist für die Holzbearbeitung nur bedingt geeignet. Werden grosse Späne abgebrochen, so können diese den ringförmigen Hohlraum verstopfen und den Abtransport der Späne blockieren. Dies wird noch durch die Tatsache begünstigt, dass die beiden konzentrischen Rohre relativ zueinander stillstehen.

Aus DE-A-26 24 371 ist eine Lochsägevorrichtung bekannt, die aus einem Führungsbohrer und einer Lochsäge besteht. Der Führungsbohrer ist ein Spiralbohrer, auf dem die Lochsäge als Kronenbohrer drehfest gehalten ist. Zusätzlich ist der Führungsbohrer der Lochsäge vorgelagert. Diese Vorrichtung ist für Holzbearbeitung nicht geeignet. Läuft der Führungsbohrer einem Jahrring entlang, so kann dies zum Verlaufen des Bohrers führen.

Bei allen bekannten Systemen wird folglich mit einem oder mehreren Bohrköpfen gearbeitet, die zum Teil unterschiedliche Schneidflächen aufweisen können, aber drehfest miteinander verbunden sind und folglich immer auch mit identischen Drehzahlen arbeiten.

Es ist Aufgabe der vorliegenden Erfindung, ein Verfahren zur Herstellung von tiefen Bohrlöchern, insbesondere in Holz, aufzuzeigen, dank dem auch bei grosstückig spanenden Materialien eine funktionierende Spanabfuhr gewährleistet ist und eine hohe Präzision des Tiefloches erreicht wird.
Diese Aufgabe löst ein Verfahren zur Herstellung von tiefen Bohrlöchern mit den Merkmalen des Patentanspruches 1.

Es ist eine weitere Aufgabe der Erfindung, einen Tieflochbohrer zur Durchführung des Verfahrens nach Patentanspruch 1 zu schaffen.
Diese Aufgabe löst ein Tieflochbohrer mit den Merkmalen des Patentanspruches 5.

Ferner ist es die Aufgabe der vorliegenden Erfindung, eine Tieflochbohrmaschine zu schaffen, mit der ein Tieflochbohrer gemäss Patentanspruch 5 gemäss dem Verfahren nach Anspruch 1 betrieben werden kann.
Die Lösung dieser Aufgabe bildet eine Tieflochbohrmaschine mit den Merkmalen des Patentanspruches 15.

In den Zeichnungen ist ein Ausführungsbeispiel des Erfindungsgegenstandes dargestellt und in der nachfolgenden Beschreibung erläutert. Es zeigt:
- Figur 1: eine schematische Darstellung der Tieflochbohrmaschine mit Tieflochbohrer von der Seite;
- Figur 2: einen Längsschnitt durch den Tieflochbohrer;
- Figur 3: einen Querschnitt durch den hinteren Teil des Tieflochbohrers;
- Figur 4: einen Querschnitt durch den vorderen Teil des Tieflochbohrers;
- Figur 5: eine perspektifische Darstellung einer bevorzugten Ausführungsform des Kernbohrers;
- Figur 6: eine Darstellung desselben Kernbohrers von oben;
- Figur 7: eine Darstellung des Kernbohrers nach Figur 5 von der Seite.

Obwohl der Schwerpunkt der Erfindung im Verfahren zur Herstellung von tiefen Bohrlöchern liegt, wird im folgenden das Ausführungsbeispiel der Tieflochbohrmaschine mit Tieflochbohrer näher beschrieben. Dies geschieht aus Gründen der Klarheit.

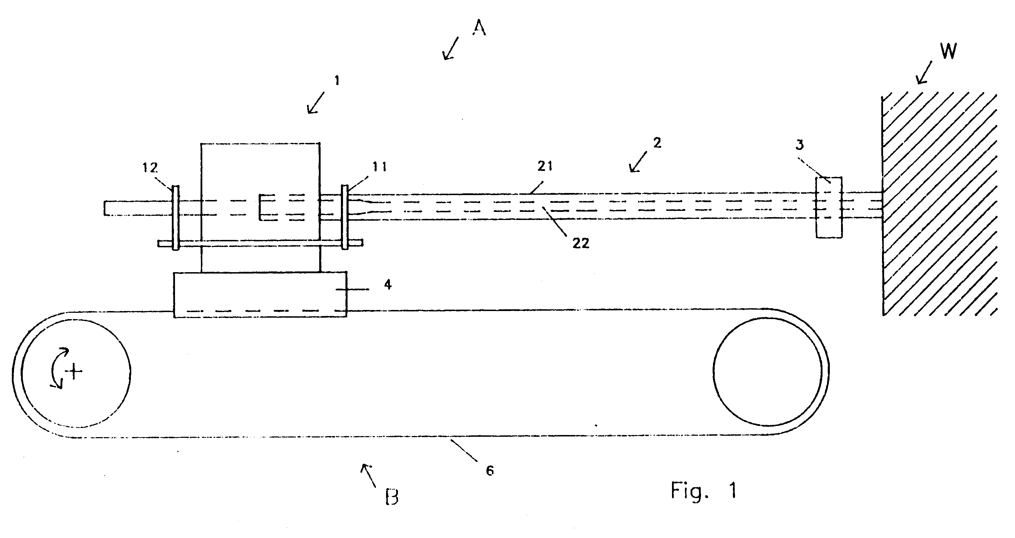

Die Tieflochbohrmaschine zum Bohren von tiefen Löchern besteht im wesentlichen, wie dies in Figur 1 ersichtlich ist, aus einer Bohrvorrichtung A, einer Vorschubvorrichtung B und einem Rahmen, der hier nicht eingezeichnet ist. Die Vorrichtungen A, B sind auf dem Rahmen fixiert. Die Bohrvorrichtung A führt die Drehbewegung des Bohrers aus und gewährleistet die Wegführung der Späne mittels einer nicht dargestellten Druckluftzufuhr. Die Vorschubvorrichtung B erzeugt den Vorschub der Bohrvorrichtung A und bestimmt die Tiefe der Bohrung.

In der Vorschubvorrichtung B treibt ein Vorschubmotor 5 über ein Getriebe eine Transmission in Form einer geschlossenen Kette 6 an. An dieser Kette 6 ist ein Trägerelement 4 befestigt, das die Bohrvorrichtung A trägt. Anhand dieser Vorschubvorrichtung B lässt sich der gewünschte Vorschub der Bohrvorrichtung A verwirklichen. Ebenfalls lässt sich elektronisch oder mechanisch die Bohrlochtiefe einstellen. Die Vorrschubvorrichtung B lässt sich aus handelsüblichen Teilen zusammensetzen, wobei ihr Aufbau beliebig gewählt werden kann. Sie kann auch mittels Pressluft betrieben werden.

Die Bohrvorrichtung A besteht aus einem Antriebsmotor 1 und einem Tieflochbohrer 2. Der Antriebsmotor 1 besitzt eine Hohlwelle. Er treibt den Tieflochbohrer 2 an.

Der Tieflochbohrer 2 setzt sich aus zwei konzentrisch ineinander angeordneten, langen, ein- oder mehrteiligen Hohlschäften zusammen, die die Bohrelemente bilden. Der Aussendurchmesser des inneren Hohlschaftes 22 entspricht dem Innendurchmesser des äusseren Hohlschaftes 21, wie in Figur 3 erkennbar ist.

Der äussere Hohlschaft 21 ist mit dafür üblichen Befestigungsmitteln am Antriebsmotor 1 befestigt und ragt auf dessen dem Werkstück zugewandten Seite, im folgenden Bohrerseite genannt, mindestens um die Länge der gewünschten Bohrung heraus. Der innere Hohlschaft 22 durchsetzt die Hohlwelle des Antriebmotors 1, ragt also auf beiden Seiten desselben, der Bohrerseite und der Rückseite, heraus. Die zwei Hohlschäfte 21, 22 werden mit verschiedenen Uebersetzungen betrieben: der äussere Hohlschaft 21 mit einer grossen Uebersetzung 11, der innere Hohlschaft 22 mit einer kleinen Uebersetzung 12. Der innere Hohlschaft 22 weist also eine grössere Drehzahl auf als der äussere Hohlschaft 21. Sie unterscheidet sich im allgemeinen um den Faktor 90 von der Drehzahl des äusseren Hohlschaftes.

Nahe dem Werkstück W ist der Tieflochbohrer 2 in einem Führungselement 3 verschiebbar gelagert. Dieses kann beispielsweise am hier nicht eingezeichneten Rahmen der Bohrmaschine befestigt sein. Das Führungselement 3 gewährleistet vorallem zu Beginn der Bohrung die Stabilität des Tieflochbohrers 2 und führt ihn während der gesamten Bearbeitungszeit.

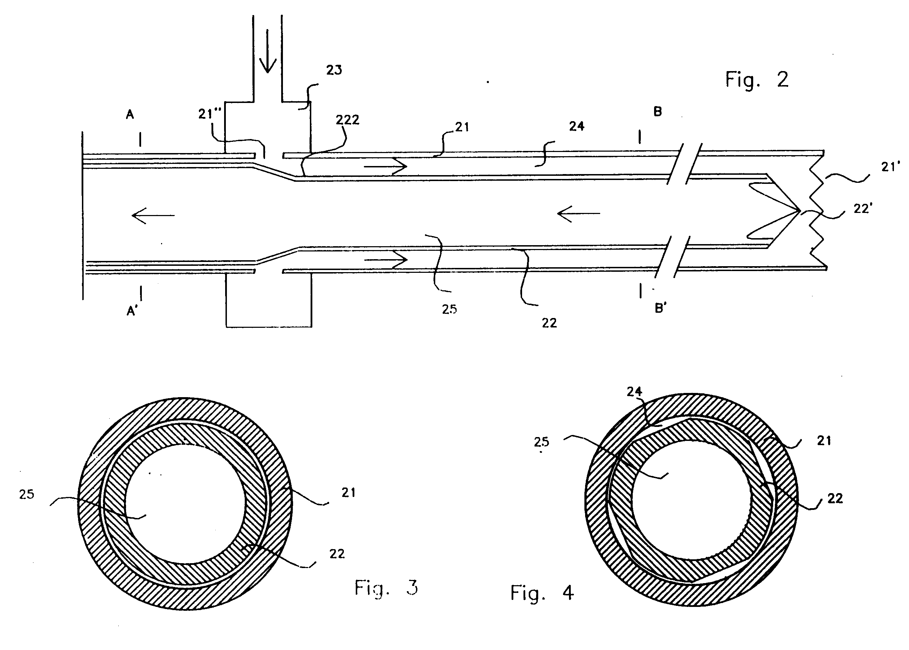

Der äussere Hohlschaft 21 weist in der Nähe des Antriebmotors 1 auf der Bohrerseite in einem definierten Bereich gleichmässig über seinen Umfang verteilte Oeffnungen 21'' auf, wie in Figur 2 ersichtlich ist. Ueber diesem Bereich befindet sich eine Presslufteinheit 23.

Der innere Hohlschaft 22 weist symmetrisch auf seinem Umfang verteilte Längsrillen 222 auf, die von demselben Bereich an bis zum bohrerseitigen Ende des Hohlschaftes verlaufen. Diese Längsrillen 222 werden durch Abschleifen des Mantels des inneren Hohlschaftes 22 erzeugt. Im so entstandenen Bereich zwischen den zwei Hohlschäften befinden sich symmetrisch verteilte Zufuhrkanäle 24, wie in Figur 4 eingezeichnet.

Die bohrerseitigen Enden beider Hohlschäfte sind mit Schneidelementen versehen. Der äussere Hohlschaft weist eine Bohrkrone 21' auf, der innere Hohlschaft einen Kernbohrer 22'. Der Kernbohrer 22' des inneren Hohlschaftes 22 ist gegenüber der Bohrkrone 21' des äusseren Hohlschaftes 21 zurückversetzt oder fluchtet mit dieser. Keinesfalls überragt er die Bohrkrone 21'. Dadurch ist erreicht, dass das innere Bohrelement dem äusseren Bohrelement nachläuft. Der äussere und der innere Hohlschaft sind beide vorzugsweise mehrteilig gefertigt. Die Bohrkrone 21' und der Kernbohrer 22' sind auf einzelnen, kurzen Hohlzylindern angeformt, die auf die langen Teile der Hohlschäfte 21,22 aufgesetzt werden. Auf diesen so gebildeten Bohrköpfen sind die eigentlichen Schneiden, vorzugsweise aus Hartmetall, aufgeschweisst oder gelötet. Im Falle der Bohrkrone ist diese Hartmetallschneide ein Zahnkranz, im Falle des Kernbohrers eine spezielle Schneideplatte. Die Schneiden können nachgeschliffen werden, ohne dass die ganzen Hohlschäfte demontiert werden müssen.

Im Betriebszustand bohrt die Bohrkrone 21' einen Zapfen aus dem Werkstück. Sie führt den Tieflochbohrer 2 und verhindert durch seine Form ein Verlaufen desselben. Der Kernbohrer 22' kann verschiedenartige Schneiden aufweisen. Der Kernbohrer 22' entfernt den Kern oder Zapfen der Bohrung. Durch seine schnelle Rotation zerspant er nicht nur den Kern in kleinste Stücke, sondern zermahlt auch die eher grossen Späne, die durch die Rotation der Bohrkrone 21' des äusseren Hohlschaftes 21 entstanden sind.

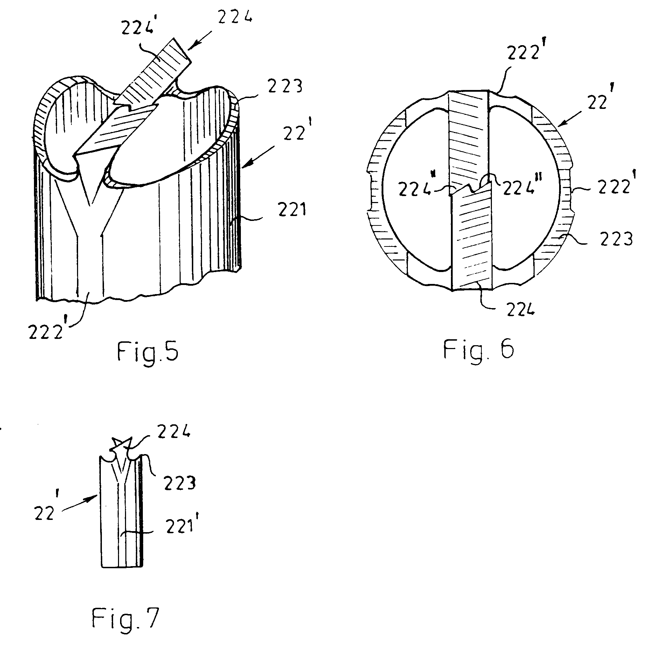

Im folgenden wird eine bevorzugte Ausführungsform des Kernbohrers 22' beschrieben. Damit der Tieflochbohrer auch bei Hölzern mit stark ausgeprägten Jahrringen, beziehungsweise in Bereiche mit Aesten, nicht verläuft, wird ein spezieller Kernbohrer 22' eingesetzt. Wählt man einen zu einer Spitze geformten Kernbohrer, so besteht die Gefahr, dass er markanten Jahrringen im Holz nachfährt und der Tieflochbohrer trotz der Führung der Bohrkrone verläuft. Der erfindungsgemässe Kernbohrer 22' weist deshalb keine Spitze, sondern eine senkrecht zur Längsrichtung angeordnete Schneide auf. Sie ist in den Figuren 5, 6 und 7 dargestellt.

Der Kernbohrer 22' besteht aus einem kurzen, den Bohrkopf bildenden Hohlzylinder, der an einem Ende ein Innengewinde aufweist. Damit kann er auf das entsprechende Aussengewinde des inneren Hohlschaftes 22 geschraubt werden. Am anderen Ende befinden sich die Schneidelemente, deren Schneidkanten in den Figuren mit dünnen Linien dargestellt sind. Als untergeordnete Schneidelemente dienen zwei periphere Schulterpartien 223, die diametral zueinander angeordnet sind und gegenüber dem Mantel 221 des Hohlzylinders in Schneidkanten zulaufen. Um 90° zu der Verbindungsdiagonalen der Schulterpartien 223 gedreht, überbrückt eine Schneide 224 in Form einer Platte diagonal den Hohlzylinder. Die Schneide 224 überragt die peripheren Schulterpartien 223 und dient als wesentliches Zerspanungselement. Sie besteht aus zwei Hauptschneiden 224', die zentrosymmetrisch um die Bohrerachse angeordnet sind und deren Schneidkanten parallel zur Diagonalen liegen. Die Schneidkante der einen Hauptschneide 224' liegt also auf der einen Seite der Diagonalen, die Schneidkante der anderen Hauptschneide auf der anderen Seite. Beide Hauptschneiden 224' weisen den gleichen, aber entgegengesetzten Neigungswinkel bezüglich der Bohrerachse auf. Da die Schneidkanten annähernd senkrecht zur Bohrerachse liegen, arbeiten die Hauptschneiden 224' ähnlich einer Planfräse. Im Bereich der Bohrerachse gehen die Hauptschneiden 224' entlang ihrer Neigung je in eine Nebenschneide 224'' über. Diese verlaufen ebenfalls zentrosymmetrisch zur Bohrerachse und schliessen in der Neigungsebene mit den Schneidkanten einen spitzen Winkel ein.

Die zwei Ansätze der Schneide 224 auf dem Hohlzylinder sind gegenüber dem oberen Bereich der Schneide 224 verjüngt. Der Hohlzylinder weist vier symmetrisch auf der Aussenmantelfläche verteilte Längsrillen 222' auf, die sich über die gesamte Länge des Hohlzylinders erstrecken. Je eine Längsrille 222' endet an der Schneidkante einer peripheren Schulterpartie 223. Um 90° versetzt verlaufen die anderen zwei Längsrillen 222' bis in den Bereich der Ansätze der Schneide. In diesem Bereich verzweigen sich die zwei Längsrillen 222' v-förmig und enden je auf einer Seite des Ansatzes.
Selbstverständlich müssen die der Luftzuführung dienenden Längsrillen 222' mit jenen der am Bohrkopf anschliessenden, mehrteiligen Verlängerungsteile des Hohlschaftes 22 fluchten.

Durch die Pressluftzufuhreinheit 23 wird von aussen Pressluft zugeführt. Sie strömt durch die Zufuhrkanäle 24 zwischen den zwei Hohlschäften 21, 22 bis zum bohrerseitigen Ende des Tieflochbohrers 2 in die Bohrung. Dabei kühlt sie beide Hohlschäfte mit den integrierten oder aufgesetzten Schneidelementen. Gleichzeitig wird der innere Hohlschaft 22 durch das Luftkissen gelagert. Als Abfuhrkanal 25 dient der Kern des inneren Hohlschaftes 22. Die Luft entweicht durch diesen Abfuhrkanal 25 und führt als Kühl- und Transportmedium zugleich das abgespante Material des Werkstückes von der Bohrstelle nach aussen weg. Die Späne werden auf der Rückseite des Antriebsmotors aus dem inneren Hohlschaft 21 geblasen. Die spezielle Form des Kernbohrers 22' optimiert die Luftverteilung an der Bohrstelle. Die Längsrillen 222' an den peripheren Schulterpartien 223 führen die Luft in die Nähe der Bohrkrone 21' des äusseren Hohlschaftes 21, damit das dort abgetragene Material erfasst wird. Die verzweigten Längsrillen 222' bei den Ansätzen der Schneide 224 erfassen vorallem die durch die Schneide 224 und die peripheren Schulterpartien 223 erzeugten Späne.

Durch das Verfahren, das mittels dieser Bohrmaschine mit Tieflochbohrer angewandt wird, ist der Fluss beim Abtransport der Späne gewährleistet. Die Späne werden durch den Kernbohrer 22' auf Abmessungen zerkleinert, die sehr viel kleiner als der Durchmesser des Abfuhrkanals 25 sind. Zudem wird eine Verklumpung der feinen Späne, bzw. Sägemehl, verhindert, indem durch die schnelle Rotationsbewegung und die Anordnung der Längsrillen 222' des Kernbohrers 22' Luftwirbel erzeugt werden, auf denen die Späne als Einzelteile mitgetragen werden.

Mit diesem Verfahren ist es somit möglich, sehr tiefe Löcher mit typischen Längen von 1 - 2 Metern ohne Unterbruch des Arbeitsvorganges zu bohren. Einerseits wird das Verlaufen des Bohrers durch die Form und Lage der Bohrkrone 21' des äusseren Schaftes 21 und die spezielle Form des Kernbohrers 22' des inneren Schaftes 22 verhindert. Andererseits ist der Abtransport der Späne durch den Verlauf des Kühl- und Transportmediums und der Funktion des Kernbohrers gewährleistet.

## Patentansprüche

1. Verfahren zur Herstellung von tiefen Bohrlöchern, insbesondere in Holz und gleichartig strukturierten Materialien, dadurch gekennzeichnet, dass zwei konzentrisch ineinander angeordnete, als Hohlschäfte mit Schneidelementen (224) aufweisenden Enden ausgebildete Bohrelemente (21,22) mit unterschiedlichen Drehzahlen betrieben werden, wobei das innere Bohrelement (22) dem äusseren Bohrelement (21) nachläuft.

2. Verfahren nach Anspruch 1, dadurch gekennzeichnet, dass das äussere Bohrelement (21) mit einer niedrigeren Drehzahl als das innere Bohrelement (22) betrieben wird.

3. Verfahren nach Anspruch 2, dadurch gekennzeichnet, dass die Drehzahl des inneren Bohrelementes (22) 10-200 mal höher als die Drehzahl des äusseren Bohrelementes (21) ist.

4. Verfahren nach Anspruch 1, dadurch gekennzeichnet, dass von aussen ein Kühl- und Transportmedium zwischen den Bohrelementen (21,22) eingeführt wird, dass dieses Kühl- und Transportmedium anschliessend zwischen den Bohrelementen (21,22) bis zur Bohrstelle strömt und von dort unter Mitnahme des abgespanten Materiales im Kern des inneren Bohrelementes (22) zurückströmt.

5. Tieflochbohrer zur Durchführung des Verfahrens nach Anspruch 1, bestehend, aus zwei konzentrisch ineinander angeordneten, unabhängig voneinander rotierbaren Hohlschäften (21,22), deren je eines Ende Schneidelemente aufweist, wobei das mit Schneidelementen versehene Ende des inneren Hohlschaftes (22) gegenüber dem Ende des äusseren Hohlschaftes (21) zurückversetzt ist.

6. Tieflochbohrer nach Anspruch 5, dadurch gekennzeichnet, dass sich zwischen den Hohlschäften (21,22) mindestens ein Zufuhrkanal (24) für ein Kühl- und Transportmedium befindet und der Kern des inneren Hohlschaftes einen Abfuhrkanal (25) für dieses Kühl- und Transportmedium aufweist.

7. Tieflochbohrer nach Anspruch 5, dadurch gekennzeichnet, dass ein Bereich des äusseren Hohlschaftes (21) Oeffnungen (21'') zur Zuführung des Kühl- und Transportmediums aufweist.

8. Tieflochbohrer nach Anspruch 7, dadurch gekennzeichnet, dass der innere Hohlschaft (22) von demselben Bereich an bis zu seinen Schneidelementen symmetrisch auf seinem Umfang verteilte Längsrillen (222) aufweist.

9. Tieflochbohrer nach Anspruch 5, dadurch gekennzeichnet, dass die Hohlschäfte (21,22) mehrteilig sind.

10. Tieflochbohrer nach Anspruch 5, dadurch gekennzeichnet, dass das Schneidelement des äusseren Hohlschaftes (21) als Bohrkrone (21') ausgebildet ist.

11. Tieflochbohrer nach Anspruch 5, dadurch gekennzeichnet, dass das Schneidelement des inneren Hohlschaftes (22) als hohlzylinderförmiger Kernbohrer (22') ausgebildet ist.

12. Tieflochbohrer nach Anspruch 11, dadurch gekennzeichnet, dass der Kernbohrer (22') eine den Hohlzylinder diagonal überbrückende Schneide (224) aufweist, deren Schneidkanten (224') annähernd senkrecht zur Bohrerachse liegen.

13. Tieflochbohrer nach Anspruch 12, dadurch gekennzeichnet, dass der Kernbohrer (22') zwei periphere, mit Schneidkanten versehene Schulterpartien (223) aufweist, die je um 90° bezüglich der Schneide (224) gedreht angeordnet sind, und dass die Schneide (224) die Schulterpartien (223) überragt.

14. Tieflochbohrer nach Anspruch 13 und 8, dadurch gekennzeichnet, dass sich mindestens je eine der symmetrisch auf dem Umfang des Kernbohrers (22') verteilten Längsrillen (222') bis über die peripheren Schulterpartien (223) erstreckt und dass ferner je eine v-förmig verzweigte Längsrille (222') je bei einem Ansatz der Schneide (224) an den Hohlzylinder mündet.

15. Tieflochbohrmaschine, die mit einem Tieflochbohrer nach Anspruch 5 versehen ist.

16. Tieflochbohrmaschine nach Anspruch 15, dadurch gekennzeichnet, dass ihr Antriebsmotor (1) eine Hohlwelle aufweist.

17. Tieflochbohrmaschine nach Anspruch 16, dadurch gekennzeichnet, dass der innere Hohlschaft (22) zu beiden Seiten des Antriebsmotors (1) herausragt und sein schneidelementloses Ende offen ist.

18. Tieflochbohrmaschine nach Anspruch 17, dadurch gekennzeichnet, dass ihr Tieflochbohrer (2) in einem starren Führungselement (3) verschiebbar gelagert ist, das sich nahe dem Werkstück (W) befindet.

19. Tieflochbohrmaschine nach Anspruch 18, dadurch gekennzeichnet, dass sie mit einer für diese Zwecke üblichen Vorschubvorrichtung (B) versehen ist.

## Claims

1. A method for producing deep holes, particularly in wood and similar structural materials, characterized in that two drilling members (21, 22) arranged concentrically within one another and constructed as hollow shanks with ends having cutting members (224) are operated at different speeds, the inner drilling member (22) trailing behind the outer drilling member (21).

2. A method according to claim 1, characterized in that the outer drilling member (21) is operated at a lower speed than the inner drilling member (22).

3. A method according to claim 2, characterized in that the speed of the inner drilling member (22) is 10 to 200 times higher than the speed of the outer drilling member (21).

4. A method according to claim 1, characterized in that a cooling and transfer medium is introduced between the drilling members (21, 22) from the outside, that said cooling and transfer medium then flows between the drilling members (21, 22) up to the drilling point and from there flows back in the core of the inner drilling member (22) entrained with removed material.

5. A deep hole drill for performing the method according to claim 1, comprising two independently rotatable hollow shanks (21, 22) arranged concentrically within one another, one end of each of these having cutting members, the end of the inner hollow shank (22) provided with the cutting members being set back with respect to the end of the outer hollow shank (21).

6. A deep hole drill according to claim 5, characterized in that between the hollow shanks (21, 22) is at least one supply channel (24) for a cooling and transfer medium and the core of the inner hollow shank has a removal channel (25) for said cooling and transfer medium.

7. A deep hole drill according to claim 5, characterized in that an area of the outer hollow shank (21) has openings (21'') for the supply of the cooling and transfer medium.

8. A deep hole drill according to claim 7, characterized in that the inner hollow shank (22), from the same area and up to its cutting members, has symmetrically arranged, circumferentially distributed longitudinal grooves (222).

9. A deep hole drill according to claim 5, characterized in that the hollow shanks (21, 22) are in multipart form.

10. A deep hole drill according to claim 5, characterized in that the cutting member of the outer hollow shank (21) is constructed as a drill bit (21').

11. A deep hole drill according to claim 5, characterized in that the cutting member of the inner hollow shank (22) is constructed as a hollow cylindrical core drill (22').

12. A deep hole drill according to claim 11, characterized in that the core drill (22') has a cutting lip (224) diagonally bridging the hollow cylinder and with cutting edges (224') approximately perpendicular to the drill axis.

13. A deep hole drill according to claim 12, characterized in that the core drill (22') has two peripheral shoulder portions (223) provided with cutting edges and which are in each case turned by 90° with respect to the cutting lip (224) and that the cutting lip (224) projects over the shoulder portions (223).

14. A deep hole drill according to claims 13 and 8, characterized in that at least one of the symmetrically distributed longitudinal grooves (222') around the circumference of the core drill (22') extends over and beyond the peripheral shoulder portions (223) and that in each case one V-shaped branched longitudinal groove (222') emerges at a step of the cutting lip (224) on the hollow cylinder.

15. A deep hole drilling machine, which is provided with a deep hole drill according to claim 5.

16. A deep hole drilling machine according to claim 15, characterized in that its drive motor (1) has a hollow shaft.

17. A deep hole drilling machine according to claim 16, characterized in that the inner hollow shank (22) projects to either side of the drive motor (1) and the free end of its cutting member is open.

18. A deep hole drilling machine according to claim 17, characterized in that its deep hole drill (2) is displaceably mounted in a rigid guide member (3) positioned close to the workpiece (W).

19. A deep hole drilling machine according to claim 18, characterized in that it is provided with a standard feed mechanism (B) for such purposes.

## Revendications

1. Procédé pour la réalisation de trous profonds, en particulier dans du bois et des matériaux de structure semblable, caractérisé en ce qu'on met en oeuvre deux éléments de forage (21,22), disposés concentriquement l'un par rapport à l'autre, ayant la forme de tiges creuses avec des extrémités présentant des éléments de coupe (224) et ayant des vitesses différentes, l'élément de forage interne (22) étant en retard sur l'élément de forage externe (21).

2. Procédé selon la revendication 1, caractérisé en ce que l'élément de forage externe (21) est mis en mouvement avec une vitesse inférieure à celle de l'élément de forage interne(22).

3. Procédé selon la revendication 2, caractérisé en ce que la vitesse de l'élément de forage interne (22) est 10-200 fois supérieure à la vitesse de l'élément de forage externe (21).

4. Procédé selon la revendication 1, caractérisé en ce qu'on introduit de l'extérieur un moyen de refroidissement et de transport entre les éléments de forage (21,22) et que ce moyen de refroidissement et de transport s'écoule ensuite entre les éléments de forage (21,22) jusqu'à l'endroit du forage et en revient en entraînant la matière enlevée dans le coeur de l'élément de forage interne (22).

5. Foret long pour la réalisation du procédé selon la revendication 1, consistant en deux tiges creuses (21,22) disposées concentriquement l'une dans l'autre et pouvant tourner indépendamment l'une de l'autre, dont l'une des extrémités présente des éléments de coupe, tandis que l'extrémité de la tige creuse interne (22) munie d'éléments de coupe est décalée en retrait par rapport à l'extrémité de la tige creuse externe (21).

6. Foret long selon la revendication 5, caractérisé en ce qu'il existe entre les tiges creuses (21,22) au moins un canal d'amenée (24) pour un moyen de refroidissement et de transport et le coeur de la tige creuse interne présente un canal d'évacuation (25) pour ce moyen de refroidissement et de transport.

7. Foret long selon la revendication 5, caractérisé en ce qu'une zone de la tige creuse externe (21) présente des orifices (21'') pour l'introduction du moyen de refroidissement et de transport.

8. Foret long selon la revendication 7, caractérisé en ce que la tige creuse interne (22) présente à partir de cette même zone et jusqu'à son élément de coupe des rainures longitudinales (222) réparties symétriquement sur son pourtour.

9. Foret long selon la revendication 5, caractérisé en ce que les tiges creuses (21,22) sont en plusieurs parties.

10. Foret long selon la revendication 5, caractérisé en ce que l'élément de coupe de la tige creuse externe (21) a la forme d'une couronne de perçage.

11. Foret long selon la revendication 5, caractérisé en ce que l'élément coupant de la tige creuse interne (22) est agencé comme un carottier (22') de forme cylindrique creuse.

12. Foret long selon la revendication 11, caractérisé en ce que le carottier (22') présente un tranchant (224) traversant le cylindre creux en diagonale et dont les arêtes coupantes (224') sont pratiquement perpendiculaires à l'axe du foret.

13. Foret long selon la revendication 12, caractérisé en ce que le carottier (22') présente deux parties d'épaulement périphériques (223), munies d'arêtes coupantes, qui sont chacune tournées de 90° par rapport à la lame (224), et que le tranchant (224) dépasse des parties d'épaulement (223).

14. Foret long selon les revendications 13 et 8, caractérisé en ce qu'au moins l'une des rainures longitudinales (222') réparties symétriquement sur le pourtour du carottier (22') s'étend jusqu'au-dessus des parties d'épaulement périphériques (223) et que, en outre, chacune des rainures longitudinales (222') ramifiées en forme de v débouche sur le cylindre creux à l'une des embases de la lame (224).

15. Machine à foret long, qui est munie d'un foret long selon la revendication 5.

16. Machine à foret long selon la revendication 15, caractérisée en ce que son moteur d'entraînement présente un arbre creux.

17. Machine à foret long selon la revendication 16, caractérisée en ce que la tige creuse interne (22) fait saillie des deux côtés du moteur d'entraînement (1) et que son extrémité ne comportant pas d'élément coupant est ouverte.

18. Machine à foret long selon la revendication 17, caractérisée en ce que son foret long (2) est logé avec coulissement possible dan un élément de guidage fixe (3), qui se trouve près de la pièce à usiner.

19. Machine à foret long selon la revendication 18, caractérisée en ce qu'elle est munie d'un dispositif d'avancement (B) classique pour ce but.
